# NEW EUROPEAN PATENT SPECIFICATION

(11) **EP 2 745 963 B2**
(45) Date of publication and mention of the opposition decision: **17.03.2021**
(45) Mention of the grant of the patent: 15.07.2015
(21) Application number: 12197927.2
(22) Date of filing: 19.12.2012
(51) Int. Cl.: B23B 29/04, B23B 27/10, B23B 27/08

(54) **Coupling for a cooling system in a cutting tool**
Ankopplung für ein Kühlungssystem in einem Schneidwerkzeug
Accouplement pour un système de refroidissement dans un outil de coupe

(43) Date of publication of application: 25.06.2014
(73) Proprietor: Seco Tools AB, 737 82 Fagersta (SE)
(72) Inventor: Elofsson, Johan, SE 737 47 Fagersta (SE); Jonsson, Mats, SE 776 92 Hedemora (SE); Thelin, Jimmy, 737 91 Fagersta (SE)
(74) Representative: WSL Patentanwälte Partnerschaft mbB

(56) References cited:
- EP-A1- 2 394 767
- EP-A1- 2 517 815
- WO-A1-2012/169031
- WO-A2-92/06817
- DE-A1- 3 429 842
- DE-A1- 3 434 653
- DE-A1- 10 251 922
- DE-A1- 19 725 100
- DE-U1- 8 126 791
- JP-A- 8 039 387
- JP-A- H0 825 111
- JP-A- 2010 094 748
- US-A- 2 848 790
- US-A- 3 798 725
- US-A- 4 705 435
- US-A- 5 709 508
- US-A- 5 833 403
- US-A- 5 988 952
- US-A- 6 053 669
- US-A1- 2007 283 794
- US-A1- 2007 286 689
- US-A1- 2008 124 180
- US-A1- 2009 142 150
- US-A1- 2010 254 777
- US-A1- 2012 230 780
- US-A1- 2012 230 781
- US-B2- 7 004 692
- US-B2- 7 431 543
- "Countersunk flat head screws -- Part 2: Penetration depth of cross recessesJIS B 1014: 1994", JIS B 1014: 1994, ISO 7721-2: 1990, 30 April 1994 (1994-04-30), pages 686-687,
- Erik Oberg et al: "Machinery's Handbook, 25th edition", 1997 vol. 25, pages 1528-1536,
- "Mechanical properties of fasteners made of carbon steel and alloy steel - Part 1: Bolts, screws and studs", JIS B 1051 : 2000, ISO 898-1 :1999, 20 March 2000 (2000-03-20), pages 796-797-802-803,

## Description

### BACKGROUND AND SUMMARY

The present invention relates a coupling for a cooling system in a cutting tool according to the preamble of claim 1.

In cutting tools such as parting tools that use a replaceable blade holder, in order to provide cooling and/or lubricating fluid at the site of the cutting operation, it is typically necessary to provide a bolt or screw head on a side of the blade holder facing the shank of the tool, necessitating provision of an opening in the surface of shank facing the blade holder, often in addition to openings for fastening the blade holder by screws.

It is desirable to provide a cooling system in a cutting tool that takes up minimal space. It is also desirable to provide a cooling system in a cutting tool that does not require provision of additional recesses or openings for receiving components of the cooling system. US20070283794A1, US20070286689A1, JP8039387A, and US20080124180A1 provide couplings having radial openings for fluid flow in a shank of a screw, below the head. Other couplings, such as shown in EP2394767A1, EP2517815A1, and WO9206817A2, have cylindrical heads with radial bores in the head. These structures present problems in connection with sealing and in connection with the thickness of the structures to which they can be mounted.

According to an aspect of the invention, a coupling is provided for a cooling system in a cutting tool. The coupling includes a fastener including a shank having a first end and a second end, the first end of the shank defining the first end of the fastener, a head at the second end of the shank, a top of the head defining a second end of the fastener, a longitudinal passage in the shank, and a radial opening in the head in flow communication with the longitudinal passage.

### BRIEF DESCRIPTION OF THE DRAWINGS

The features and advantages of the present invention are well understood by reading the following detailed description in conjunction with the drawings in which like numerals indicate similar elements and in which:
FIG. 1 is a schematic, exploded view of a coupling for a cooling system in a cutting tool according to an aspect of the present invention;
FIG. 2 is a top, exploded view of a coupling for a cooling system in a cutting tool according to another aspect of the present invention;
FIG. 3 is a schematic, exploded view of a portion of a coupling for a cooling system in a cutting tool according to an aspect of the present invention;
FIG. 4 is a schematic view of a portion of a coupling for a cooling system in a cutting tool according to an aspect of the present invention;
FIG. 5 is a schematic view of a portion of a fastener for a coupling for a cooling system in a cutting tool according to an aspect of the present invention; and
FIG. 6 is a cross-sectional view of a portion of a fastener for a coupling for a cooling system in a cutting tool according to an aspect of the present invention.

### DETAILED DESCRIPTION

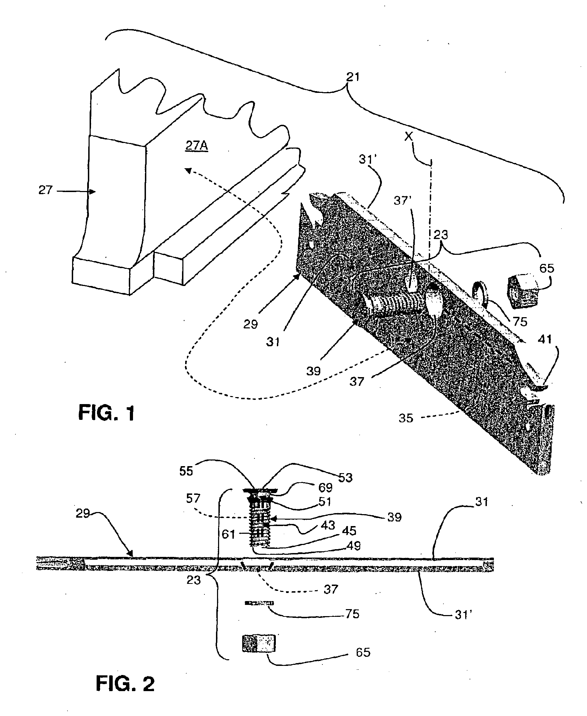

FIG. 1 shows a cutting tool 21 having a coupling 23 for a cooling system in the cutting tool. While reference will be made to a "cooling system", it will be understood that the system may also or alternatively function to as a lubrication system. The cutting tool 21 is shown in the form of a parting tool having member such as a tool shank 27, a component such as a blade holder 29 adapted to be attached to the tool shank along a side 31 of the blade holder, and a replaceable cutting insert (not shown) attached to the blade holder. U.S. Patent No. 5,031,492 discloses a cutting tool having a shank and blade holder with replaceable cutting insert of this general type. It is desirable to adapt the protruding overhang or length of the blade while simultaneously not being limited by bulky couplings. A smooth side without protruding elements will allow adjustability of the blade in the blade holder.

A passage 35 (shown in phantom in FIG. 1) in the blade holder 29 for cooling and/or lubricating fluid extends from an opening 37 for a fastener 39 to a point 41 near the cutting insert. The fastener 39 is part of the coupling 23 and is fastened to the blade holder 29 by a structure such as a nut 65 (FIGS. 2-4), ordinarily with a washer 75 disposed between the nut and the blade holder. A conduit (not shown) connected to a source of fluid can be attached to a shank 43 of the fastener 39, such as by another nut (not shown).

The particular cutting tool 21 illustrated in FIG. 1 has a blade holder 29 that is indexable to two positions by turning the blade holder 180 degrees about a vertical axis X through the blade holder. Of course, non-indexable blade holder 29 as in U.S. Patent No. 4,938,641 may alternatively be provided. The opening 37 is larger on a side 31 of the blade holder 29 facing a surface 27A of the tool shank and is shaped to permit the entire head 51 of the fastener 39 to be flush with or recessed relative to the side of the blade holder facing the surface 27A. Stated another way, the opening 37 on a side 31 of the blade holder 29 receives the entire head 51 of the fastener 39. For such an indexable blade holder 29, two openings 37 and 37' are ordinarily formed in the blade holder. The opening 37' is larger on the side 31' facing away from the tool shank and smaller on the side 31 facing the tool shank and is used to fasten the blade holder 29 to the tool shank 27 or is unused, and the opening 37 is used to receive the fastener 39 and is smaller on the side 31' facing away from the tool shank and larger on the side 31 facing the tool shank. The opening 37' may be used to receive a bolt to secure the blade holder 29 to the shank 27, or may simply not be used and the blade holder may be secured to the shank by some other means. When the blade holder 29 is indexed by turning the blade holder 180 degrees about its vertical axis X, then the large end of the opening 37' faces the shank 27 and the large end of the opening 37 faces outwardly. The blade holder 29 may alternatively be indexable to two positions by rotating the blade holder about a horizontal axis, such as where a cutting insert can be mounted on opposite top and bottom corners of the blade holder, and may be indexable to four positions by rotating the blade holder about either the horizontal or vertical axis, such as where a cutting insert is mountable at four corners of the blade holder.

The cutting tool 21 may have, instead of a blade holder with replaceable cutting inserts, a blade with edges that perform the cutting function. The cutting inserts on the blade holder, if provided, may also be indexable. The cutting tool 21 need not be a parting tool and it will be appreciated that the present invention has applications in virtually any type of cutting tool for which it is desired to direct cooling and/or lubricating fluid to a particular location.

The fastener 39 facilitates providing cooling and/or lubricating fluid to the point 41 on the blade holder 29 without the need for forming recesses in the tool shank 27 to receive a nut or bolt or screw heads of fluid fittings. As seen, for example, in FIGS. 2-3, the fastener 39 comprises the shank 43 having a first end 45 and a second end 47. The first end 45 of the shank 43 can define the first end 49 of the fastener 39.

The fastener 39 also comprises the head 51 at the second end 47 of the shank 43. A top 53 of the head 51 can define a second end 55 of the fastener 39.

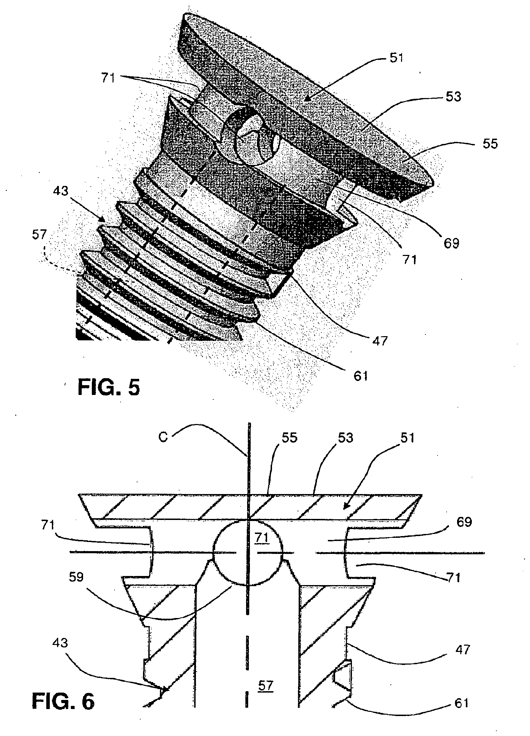

As seen in FIGS. 5-6, a longitudinal passage 57 (in phantom in FIG. 5) is provided in the shank 39. The longitudinal passage 57 is illustrated as a passage primarily extending through a center of the shank 39 along a central axis C of the fastener. As seen for example in FIG. 2, the longitudinal passage 57 extends to the first end 45 of the shank 43 because that can facilitate forming the longitudinal passage in the shank and permitting convenient attachment of fluid fittings. As seen in FIG. 6, the longitudinal passage 57 only extends to a point 59 in the head that is spaced from the top 53 of the head or from the second end 55 the fastener 39.

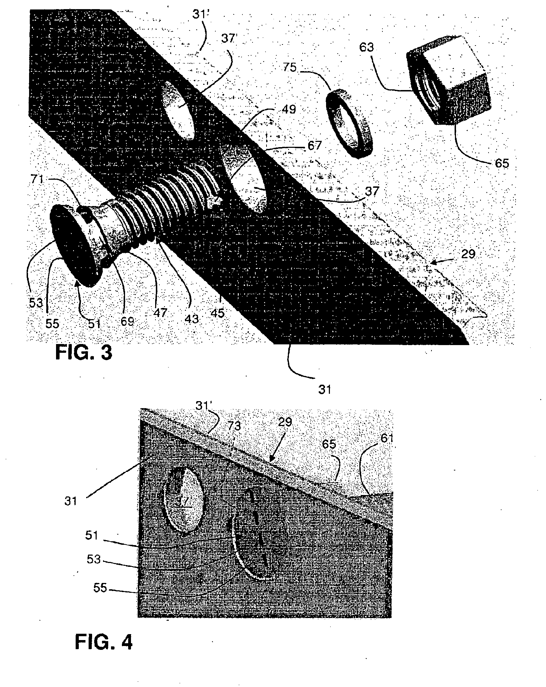

The longitudinal passage 57 is non-circular at the first end 45 of the shank 43. The fastener 39 typically has external threads 61 along the shank 43 that are intended to mate with internal threads 63 in a member such as a nut 65 (FIGS. 2-4) and fluid fitting components (not shown). By providing a non-circular longitudinal passage 57 at the first end 45 of the shank 43, such as a hexagonal shape, a hex wrench can be used to tighten the fastener 39 relative to the internally threaded member. The non-circular passage 57 can have a number of shapes other than hexagonal, such as, as seen for example in FIG. 3, a generally circular shape with grooves 67 extending perpendicular to the central axis of the fastener 39 for receiving a screwdriver. The grooves 67 or some other radial opening (not shown) extending to the passage 57 can also or alternatively be provided to permit or facilitate flow communication between a fluid conduit that leads to a source (not shown) of cooling and/or lubricating fluid.

As seen for example in FIG. 5 and 6, a radial opening 69 is provided in the head 51 and is in flow communication with the longitudinal passage 57. The radial opening 69 can comprise any suitable structure for facilitating flow communication between the passage 35 in the blade holder 29 and the longitudinal passage 57 in the shank 43, such as a single hole. In a presently preferred embodiment seen in FIGS. 1-3 and 5-6, the radial opening 69 is in the form of an annular groove in the head. By providing an annular groove, the rotational orientation of the fastener 39 relative to the passage 35 in the blade holder 29 is substantially immaterial. Regardless of the rotational orientation of the fastener 39 relative to the passage 35, flow to the passage from the longitudinal passage 57 is permitted through the annular groove. The radial opening 69 can also comprise at least one hole 71 between the annular groove and the longitudinal passage 57 in the shank 43.

The head 51 can comprise a shaped, female opening 73 (shown in phantom in FIG. 4) for mating with a tool (not shown) such as a screwdriver or hex wrench having a corresponding male engaging portion. The shaped, female opening 73 can be provided for securing the fastener 39 relative to an internally threaded member such as the nut 65 or another nut forming part of a fluid conduit instead of or in addition to the longitudinal passage 57 that is non-circular at the first end 45 of the shank 43. Alternatively, the head 51 at the second end 55 of the fastener can display a substantially flat surface as shown in FIGS. 1-3 and 5.

The opening 37 can extend into or through the blade holder 29 or other component. For a cutting tool 21 including a blade holder 29 as shown, the opening 37 will ordinarily extend entirely through the blade holder 29, however, for other tools, the opening may extend only partially through the entire thickness of the tool, such as where an internal opening (not shown) in the tool is in flow communication with a fluid conduit in the tool and has internal threads for mating with the external threads 61 of the fastener. As seen in FIGS. 1-3, the opening 37 has a diameter at least as large as a diameter of the shank 43 and at least a portion of the opening has a diameter smaller than a diameter of the head 51. Ordinarily, the head 51 and the opening 37 each have matching, generally frustoconical shapes, i.e., the opening is countersunk. The opening 37 is ordinarily of sufficient width and length so that the head 51 is adapted to be completely disposed inside the opening. In this way, when the fastener 39 is disposed in the opening 37 of a member such as the blade holder 29 and the blade holder is fastened to a member such as a tool shank 27, the second end of the fastener 55 can be disposed flush with or inside the blade holder and it is not necessary to provide a recess in the surface of the shank facing the blade holder in order to receive a head of the fastener.

To facilitate providing a good seal to prevent leakage of fluid around the head 51 of the fastener 39, the fastener can be made of a softer material than the component. For example, a fastener 39 in the form of a screw can be made of a relatively soft steel material, while a component in the form of a blade holder 29 can be made of a relatively hard steel material, such as a high speed steel material. Additionally, an elastic gasket 75 as seen in FIGS. 1-3, such as an O-ring gasket, or a washer, can be disposed around the shank 43 adjacent the opening 37. In this way, when the fastener 39 is fastened to the blade holder 29 by the nut 65, the elastic gasket 75 can prevent leakage through any gaps between the abutting surfaces of the blade holder and the nut.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such.

While this invention has been illustrated and described in accordance with a preferred embodiment, it is recognized that variations and changes may be made therein without departing from the invention as set forth in the claims.

## Claims

1. A coupling (23) for a cooling system in a cutting tool (21), comprising
a fastener (39) comprising
a shank (43) having a first end (45) and a second end (47), the first end (45) of the shank (43) defining the first end (49) of the fastener (39),
a head (51) at the second end of the shank (43), a top (53) of the head (51) defining a second end (55) of the fastener (39),
wherein the head (51) is frustoconical with a narrowest end closest to the shank and the fastener (39) comprises
a longitudinal passage (57) in the shank (43), and
a radial opening (69) in the head (51) in flow communication with the longitudinal passage (57), **characterized in that**
the longitudinal passage (57) extends from the first end (45) of the shank (43) to a point (59) in the head (51), wherein
the longitudinal passage (57) is non-circular at the first end (45) of the shank (43).

2. The coupling (23) as set forth in claim 1, **characterized in that** the longitudinal passage (57) extends along a central axis (C) of the fastener (39).

3. The coupling (23) as set forth in claim 1 or 2, **characterized in that** the longitudinal passage (57) extends to a point (59) in the head (51) spaced axially from the second end (55) of the fastener (39).

4. The coupling (23) as set forth in any of claims 1-3, **characterized in that** the radial opening (69) comprises an annular groove in the head (51).

5. The coupling (23) as set forth in claim 4, **characterized in that** the radial opening (69) comprises at least one hole (71) between the annular groove and the longitudinal passage (57).

6. The coupling (23) as set forth in any of claims 1-5, **characterized in that** the head (51) comprises a shaped, female opening (73) for mating with a tool having a corresponding male engaging portion.

7. The coupling (23) as set forth in any of claims 1-6, **characterized in that** the shank (43) comprises external threads (61).

8. The coupling (23) as set forth in claim 7, **characterized in that** the coupling (23) comprises a member (65) having internal threads (63) that mate with the external threads (61).

9. The coupling (23) as set forth in any of claims 1-8, **characterized in that** the coupling (23) comprises a blade holder (29) having an opening (37, 37') therein, the opening (37, 37') having a diameter at least as large as a diameter of the shank (43) and at least a portion of the opening having a diameter smaller than a diameter of the head (51).

10. The coupling (23) as set forth in claim 9, **characterized in that** the head (51) and the opening (37, 37') each have generally frustoconical shapes.

11. The coupling (23) as set forth in any of claims 9-10, **characterized in that** the opening (37, 37') is of sufficient width and length so that the head (51) is adapted to be completely disposed inside the opening (37, 37').

12. The coupling (23) as set forth in any of claims 9-11, **characterized in that** the fastener (39) is made of a softer material than the blade holder (29).

## Patentansprüche

1. Kupplung (23) für ein Kühlsystem in einem Schneidwerkzeug (21), welche umfasst:
eine Befestigung (39), die aufweist:
einen Schaft (43), der ein erstes Ende (45) und ein zweites Ende (47) hat, wobei das erste Ende (45) des Schaftes (43) das erste Ende (49) der Befestigung (39) definiert,
einen Kopf (51) am zweiten Ende des Schaftes (43), wobei eine Oberseite (53) des Kopfs (51) ein zweites Ende (55) der Befestigung (39) definiert,
wobei der Kopf (51) kegelstumpfförmig mit einem schmalsten Ende ist, welches dem Schaft am nächsten liegt und wobei die Befestigung (39) aufweist:
einen Längsdurchgang (57) in dem Schaft (43), und
eine radiale Öffnung (69) in dem Kopf (51) in Strömungsverbindung mit dem Längsdurchgang (57), **dadurch gekennzeichnet, dass**
der Längsdurchgang (57) sich von dem ersten Ende (45) des Schaftes (43) zu einem Punkt (59) in dem Kopf (51) erstreckt, wobei
der Längsdurchgang (57) an dem ersten Ende (45) des Schaftes (43) nicht kreisförmig ist.

2. Kupplung (23) nach Anspruch 1, **dadurch gekennzeichnet, dass** der Längsdurchgang (57) sich entlang einer zentralen Achse (C) der Befestigung (39) erstreckt.

3. Kupplung (23) nach einem der Ansprüche 1 oder 2, **dadurch gekennzeichnet, dass** der Längsdurchgang (57) sich zu einem Punkt (59) in dem Kopf (51) erstreckt, der von dem zweiten Ende (55) der Befestigung (39) axial beabstandet ist.

4. Kupplung (23) nach einem der Ansprüche 1-3, **dadurch gekennzeichnet, dass** die radiale Öffnung (69) eine ringförmig Nut in dem Kopf (51) aufweist.

5. Kupplung (23) nach Anspruch 4, **dadurch gekennzeichnet, dass** die radiale Öffnung (69) zumindest eine Bohrung (71) zwischen der ringförmigen Nut und dem Längsdurchgang (57) aufweist.

6. Kupplung (23) nach einem der Ansprüche 1-5, **dadurch gekennzeichnet, dass** der Kopf (51) eine passend geformte Aufnahmeöffnung (73) aufweist für das Zusammenpassen mit einem Werkzeug, welches einen entsprechenden vorspringenden Eingriffsabschnitt hat.

7. Kupplung (23) nach einem der Ansprüche 1-6, **dadurch gekennzeichnet, dass** der Schaft (43) ein Außengewinde (61) aufweist.

8. Kupplung (23) nach Anspruch 7, **dadurch gekennzeichnet, dass** die Kupplung (23) ein Teil (65) aufweist, das ein Innengewinde (63) hat, welches mit dem Außengewinde (61) zusammenpasst.

9. Kupplung (23) nach einem der Ansprüche 1-8, **dadurch gekennzeichnet, dass** die Kupplung (23) einen Blatthalter (29) aufweist, der eine Öffnung (37, 37') hat, wobei die Öffnung (37, 37') einen Durchmesser hat, der zumindest so groß ist wie der Durchmesser des Schaftes (43), und wobei zumindest ein Teil der Öffnung einen Durchmesser hat, der kleiner ist als ein Durchmesser des Kopfes (51).

10. Kupplung (23) nach Anspruch 9, **dadurch gekennzeichnet, dass** der Kopf (51) und die Öffnung (37, 37') jeweils im Wesentlichen kegelstumpfförmige Formen haben.

11. Kupplung (23) nach einem der Ansprüche 9-10, **dadurch gekennzeichnet, dass** die Öffnung (37, 37') eine ausreichende Weite und Länge hat, so dass der Kopf (51) so ausgelegt ist, dass er vollständig innerhalb der Öffnung (37, 37') angeordnet werden kann.

12. Kupplung (23) nach einem der Ansprüche 9-11, **dadurch gekennzeichnet, dass** die Befestigung (39) aus einem weicheren Material als der Blatthalter (29) hergestellt ist.

## Revendications

1. Accouplement (23) pour un système de refroidissement dans un outil de coupe (21), comprenant
un élément de fixation (39) comprenant
une tige (43) ayant une première extrémité (45) et une deuxième extrémité (47), la première extrémité (45) de la tige (43) définissant la première extrémité (49) de l'élément de fixation (39),
une tête (51) au niveau de la deuxième extrémité de la tige (43), une partie supérieure (53) de la tête (51) définissant une deuxième extrémité (55) de l'élément de fixation (39),
la tête (51) étant tronconique avec une extrémité la plus étroite la plus proche de la tige et l'élément de fixation (39) comprenant
un passage longitudinal (57) dans la tige (43), et
une ouverture radiale (69) dans la tête (51) en communication d'écoulement avec le passage longitudinal (57), ***caractérisé en ce que***
le passage longitudinal (57) s'étend de la première extrémité (45) de la tige (43) à un point (59) dans la tête (51),
le passage longitudinal (57) étant non circulaire au niveau de la première extrémité (45) de la tige (43).

2. Accouplement (23) selon la revendication 1, **caractérisé en ce que** le passage longitudinal (57) s'étend le long d'un axe central (C) de l'élément de fixation (39).

3. Accouplement (23) selon la revendication 1 ou 2, **caractérisé en ce que** le passage longitudinal (57) s'étend jusqu'à un point (59) dans la tête (51), écarté axialement de la deuxième extrémité (55) de l'élément de fixation.

4. Accouplement (23) selon l'une quelconque des revendications 1 à 3, **caractérisé en ce que** l'ouverture radiale (69) comprend une rainure annulaire dans la tête (51).

5. Accouplement (23) selon la revendication 4, **caractérisé en ce que** l'ouverture radiale (69) comprend au moins un trou (71) entre la rainure annulaire et le passage longitudinal (57).

6. Accouplement (23) selon l'une quelconque des revendications 1 à 5, **caractérisé en ce que** la tête (51) comprend une ouverture femelle profilée (73) pour un raccordement avec un outil ayant une partie d'engagement mâle correspondante.

7. Accouplement (23) selon l'une quelconque des revendications 1 à 6, **caractérisé en ce que** la tige (43) comprend des filetages externes (61).

8. Accouplement (23) selon la revendication 7, **caractérisé en ce que** l'accouplement (23) comprend un élément (65) ayant des filetages internes (63) qui s'accouplent avec les filetages externes (61).

9. Accouplement (23) selon l'une quelconque des revendications 1 à 8, **caractérisé en ce que** l'accouplement (23) comprend un porte-lame (29) ayant une ouverture (37, 37') dans celui-ci, l'ouverture (37, 37') ayant un diamètre au moins aussi grand qu'un diamètre de la tige (43) et au moins une partie de l'ouverture ayant un diamètre inférieur à un diamètre de la tête (51).

10. Accouplement (23) selon la revendication 9, **caractérisé en ce que** la tête (51) et l'ouverture (37, 37') ont chacune des formes globalement tronconiques.

11. Accouplement (23) selon l'une quelconque des revendications 9 - 10, **caractérisé en ce que** l'ouverture (37, 37') est d'une largeur et d'une longueur suffisantes pour que la tête (51) soit adaptée pour être complètement disposée à l'intérieur de l'ouverture (37, 37').

12. Accouplement (23) selon l'une quelconque des revendications 9 à 11, **caractérisé en ce que** l'élément de fixation (39) est constitué d'un matériau plus mou que le porte-lame (29).
